# EUROPEAN PATENT APPLICATION

(11) **EP 4 806 272 A1**
(43) Date of publication of application: **16.09.2026**
(21) Application number: 26164639.2
(22) Date of filing: 13.03.2026
(51) Int. Cl.: A23G 3/34, A23L 33/00, A23G 3/36, A23L 7/126, A23L 33/125, A23L 33/17, A23L 33/19

(54) **IMPROVEMENTS IN OR RELATING TO EDIBLE PRODUCTS**

(30) Priority: 14.03.2025 GB 202503743
(71) Applicant: The Brecks Company Limited, Selby East Yorkshire YO8 6DJ (GB)
(72) Inventor: Hirst, James, Selby, YO8 6DJ (GB); Hirst, Charles, Selby, YO8 6DJ (GB)
(74) Representative: Aldridge, Christopher Simon

(57) **Abstract**

A cooked, solid, food product is provided, which comprises at least 10 wt% of protein and at least 20 wt% of water. The food product may contain further ingredients selected from soluble fibre, monosaccharide and/or or disaccharide, and sugar alcohol. The food product contains not more than 300 kcal per 100 g. The food product may be formed into food bars for individual consumption by consumers wanting a high protein intake, with low calories. The bars are optionally enrobed, for example by a cocoa-containing coating. Enrobing increases the calorie count but the bars are still high in protein and low in calories compared with available protein bars.

## Description

This invention relates to edible products. It relates in particular to edible solid products which are intended to be eaten as a piece or item, usually in a single eating. Often such edible products are elongate in shape and may be called food bars. Examples of food bars are protein bars and high fibre bars. However the edible products do not have to be bar-shaped. They could be of any shape, for example ball-shaped or cookie-shaped. For convenience and ease of reading the term "food portions" is used in this specification and it should be understood that this embraces food bars and other shapes.

Known food portions, for example protein bars, are often high in calories. However the components thereof which are especially calorific - for example protein, starch and, especially, fat - provide good eating qualities (organoleptic properties) and are hard to reduce or remove. Optimising one component, for example protein, has tended to lead to a high requirement for other calorific components, if good eating properties are to be achieved. As a result some food portions have very high calorific values, over 500 kcal per 100 g in the case of some protein and bars.

It is an object of embodiments of the invention to provide food portions which are high in protein but low in calories, and yet which have good eating qualities.

In accordance with a first aspect of the present invention there is provided a cooked, solid, food product which contains:
a) at least 10 wt% of protein and
b) at least 20 wt% of water,
   and
c) which has an energy content of not more than 300 kcal per 100 g of the cooked, solid, food product.

The food products to which the invention relates could be greater than 100 g in weight, and intended to be cut by a consumer into food portion(s) of whatever size the consumer desires, and whenever they desire. Such food products greater than 100 g in weight could, for example, be in the form of slabs or blocks.

Alternatively food products to which this invention relates may be provided as food portions, which are not more than 100 g in weight.

Suitably such food portions are not more than 80 g in weight, for example not more than 60 g, for example not more than 50g.

Suitably such food portions are at least 20 g in weight, for example at least 30g, for example at least 40 g.

Such food portions could be food bars, though other shapes are possible.

Such food portions may be individually wrapped.

Food portions as defined herein represent a further aspect of the invention.

A plurality of individually wrapped food portions could be further wrapped, together, as a package or stack. This could also be done for a plurality of unwrapped food portions, with the result that a wrapped package or stack of individually unwrapped food portions is provided.

In this specification, a solid food product or solid food portion means a food product or food portion which is set, or shape-stable; as distinct from a flowable or displaceable material, such as a liquid or slurry. A solid food product or solid food portion of this invention may be held in the hand and eaten.

In the definitions of this specification we use the term 'protein' to include natural proteins, proteins produced by microbial fermentation of biomass, and derived proteins, for example fully or partially hydrolysed proteins, and fermentation products of proteins.

The food product or the food portions may be enrobed by a coating, as will be further described, or may be unenrobed. Numerical definitions are given in this specification to define, for example, the weight of food product or food portions, and their calorific values, and the wt% values of components of the food products or food portions. These numerical definitions apply in this specification (including the claims) to food products or food portions which have not been enrobed, unless we expressly state otherwise.

One or more sources of protein may be employed, in the present invention.

Suitably a protein present in a food product or food portion of the invention may be derived from a dairy source and/or from a vegetal source. In a preferred food product or food portion of the invention both a dairy source of protein and a vegetal source of protein are used.

A suitable dairy source of protein is milk and includes concentrated forms of milk. Cow's milk is favoured for its flavour and ready availability but other sources of milk, from other animals, could be used.

Especially valued in this invention is the casein component of milk. Also valued in this invention is the whey component of milk. Either of these components may be used on their own in embodiments of the present invention but in favoured embodiments they are used together. Suitably they may be used in the proportions in which they are present, in milk. Thus in the case of cow's milk, the weight ratio of casein to whey may typically be about 80:20.

Milk protein concentrate (MPC) is a commercial product which can be used in the present invention. MPC is rich in casein and whey proteins. These are present in MBC in a weight ratio similar to or substantially the same as in the cow's milk from which MPC is made.

Legumes are a suitable vegetal source of protein. Examples of vegetal sources of protein in the present invention are beans and pulses, for example soy beans and peas.

In embodiments of the invention the protein present may comprise a dairy component, for example casein and/or whey, and a bean and/or pulse component, for example soy beans and/or peas.

Other protein sources may be used in the present invention. Examples are proteins derived from collagen sources, and proteins derived from seaweeds. Further examples are animal (non-dairy) proteins, for example from meat, poultry, eggs, fish, molluscs and insects.

In embodiments of the invention the food product or food portion contains at least 14 wt% of protein, for example at least 18 wt%. In some embodiments of the invention the food product contains at least 20 wt% of protein, for example at least 24 wt%.

In embodiments of the invention the food product or food portion contains up to 50 wt% of protein, for example up to 40 wt%. In some embodiments of the invention the food product contains up to 35 wt% of protein, for example up to 30 wt%.

In embodiments of the invention a food product or food portion contains at least 25 wt% of water, for example at least 30 wt% water. In some embodiments of the invention a food product or food portion contains at least 35 wt % of water, for example at least 40 wt%. In embodiments, a food product or food portion may contain at least 45 wt% of water, for example at least 50 wt%.

In embodiments of the invention a food product or food portion may contain up to 70 wt% of water, for example up to 65 wt%. In some embodiments of the invention a food product or food portion contains up to 60 wt% of water, for example up to 55 wt%. In other embodiments of the invention a food product or food portion may contains up to 50 wt% of water, for example up to 45 wt%, or up to 40 wt%.

In embodiments of the invention a food product or food portion contains soluble fibre.

In embodiments of the invention a food product or food portion contains at least 4 wt% of soluble fibre, for example at least 6 wt%, for example at least 8 wt%. In embodiments of the invention a food product or food portion contains at least 10 wt% of soluble fibre, for example at least 12 wt%, for example at least 14 wt%, for example at least 16 wt%. In some embodiments of the invention a food product or food portion contains at least 18 wt% of soluble fibre, for example at least 20 wt%, for example at least 24 wt%.

In embodiments of the invention a food product or food portion contains up to 50 wt% of soluble fibre, for example up to 40 wt%. In some embodiments of the invention a food product or food portion contains up to 30 wt% of soluble fibre, for example up to 28 wt%.

Sources of soluble fibre include fruits, vegetables - for example grains, root vegetables and legumes - and dairy products.

Many fruits are useful sources of soluble fibre. Notable examples are apples and figs.

Many grains are useful sources of soluble fibre. Notable examples are oats, rice and corn.

Many vegetable roots are useful sources of soluble fibre. Notable examples are sugar beets, parsnips, carrots and chicory roots.

Further examples of plants which can be useful sources of soluble fibre include agave; and beans, peas and lentils.

A further example of a soluble fibre useful in the present invention is oligofructose syrup (FOS). Oligofructose syrup is a useful choice, since as well as being a soluble fibre it supplies moderate sweetening without a large increase in calories.

A further example of a soluble fibre useful in the present invention is galactooligosaccharide (GOS), which may be produced through the enzymatic conversion of lactose. The lactose may be obtained from bovine milk. GOS is also found in beans, and root vegetables.

A further example of a soluble fibre useful in the present invention is a dextrin. A dextrin may, for example, be wheat dextrin or maltodextrin.

A further example of a soluble fibre useful in the present invention is polydextrose.

One or more sources of soluble fibre may be employed, in the present invention.

Embodiments of the invention low in soluble fibre may be provided. Suitably such a food product or food portion of the invention may contain less than 4 wt% of soluble fibre; for example less than 3 wt%.

Suitably a food product or food portion of the invention may contain a monosaccharide, for example selected from glucose, fructose, ribose and galactose; and/or a disaccharide for example selected from sucrose (from glucose and fructose), lactose (from glucose and galactose), and maltose (from two molecules of glucose).

Suitably a food product or food portion of the invention may contain at least 5 wt% of monosaccharide and/or disaccharide; suitably at least 8 wt %, for example up to 10 wt%; and in some embodiments at least 12 wt%.

Suitably a food product or food portion of the invention may contain up to 30 wt% of monosaccharide and/or disaccharide; suitably up to 24 wt %, for example up to 20 wt%; and in some embodiments up to 16 wt%.

One or more sources of monosaccharide and/or disaccharide may be employed, in the present invention.

In other embodiments of the invention a food product or food portion low in monosaccharide and/or disaccharide may be provided. Suitably such a food product or food portion of the invention contains less than 5 wt% of monosaccharide and/or disaccharide, suitably less than 3 wt%. In embodiments a food product or food portion of the invention may contain substantially no monosaccharide and no disaccharide.

When both a monosaccharide and a disaccharide are employed in a food product or food portion of the invention the numerical definitions given are for such compounds in summation.

Suitably a food product or food portion of the invention may contain a sugar alcohol. A sugar alcohol may be derived from a monosaccharide or disaccharide that has been hydrogenated, and include xylitol, erythritol, sorbitol, mannitol, isomalt, and maltitol.

Suitably a food product or food portion of the invention may contain at least 5 wt% of sugar alcohol; suitably at least 8 wt %, for example up to 10 wt%; and in some embodiments at least 12 wt%.

Suitably a food product or food portion of the invention may contain up to 30 wt% of sugar alcohol; suitably up to 24 wt%; or up to 20 wt%; and in some embodiments up to 16 wt%.

One or more sources of sugar alcohol may be employed, in the present invention.

In other embodiments of the invention a food product or food portion low in sugar alcohol may be provided. Suitably such a food product or food portion of the invention contains less than 5 wt% of sugar alcohol; suitably less than 3 wt%. In embodiments a food product or food portion of the invention may contain substantially no sugar alcohol.

Suitably a food product or food portion of the invention is low in fat.

Suitably a food product or food portion of the invention may contain not more than 8 wt% fat, and suitably not more than 5 wt% fat. Some embodiments may have not more than 3 wt% fat. In embodiments a food product or food portion of the invention may contain substantially no fat.

Suitably a food product or food portion of the invention may have not more than 20 wt% additional carbohydrates (that is, total carbohydrates excluding any soluble fibre, monosaccharides, disaccharides and sugar alcohols that may be present), and suitably not more than 10 wt% of such additional carbohydrates, and in embodiments suitably not more than 5 wt%. In embodiments a food product or food portion of the invention may contain substantially no additional carbohydrates.

Typically, additional carbohydrates, when present, may include polysaccharide(s), for example glycogen, cellulose and starch, and its components amylose and amylopectin.

It will be appreciated that some ingredients used in this invention may provide a plurality of food types. For example beans may provide protein and soluble fibre, and a small amount of naturally present monosaccharide and/or disaccharide. Official information is available to help determine without difficulty the amounts of the respective food types - for example protein, fat, soluble fibre - which are present in added components. Further, manufacturers are required to provide nutritional information for the products they sell. Therefore it is normal activity in this field to determine and specify the total amounts of the different food types present in a manufacture food product.

In this specification, when a weight percentage of a protein is stated this relates to pure protein. For example, if an ingredient is a protein isolate of 90% concentration and is present in the feedstock at 25 wt%, the protein provides 22.5 wt% of the food product.

In this specification, when a weight percentage is stated for soluble fibre, or fat, or carbohydrate (whether monosaccharide and/or disaccharide, sugar alcohol or additional carbohydrate) or this relates to pure (resolved) soluble fibre, or fat, or carbohydrate, in the same manner as described above for proteins.

In embodiments of this invention there may be more than one protein, more than one soluble fibre, more than one fat, more than one carbohydrate component. When a percentage value is stated for a component, for example a protein, a soluble fibre, a fat or a carbohydrate component, this refers to the total amount of that component; for example the summated amount of all proteins, the summated amount of all soluble fibre components, the summated amount of all mono- and disaccharides, the summated amount of all sugar alcohols, the summated amount of all additional carbohydrates, and the summated amount of all fats.

A food product or food portion of the invention may contain an ingredient which is added as a preservative. In embodiments in which a preservative is added, the preservative is suitably a natural product or a material naturally present in food.

Suitably a food product or food portion of the invention does not contain any artificial preservatives. Such compounds may include nitrates, for example sodium nitrate; benzoates, for example potassium benzoate and sodium benzoate; proprionates, for example calcium proprionate and sodium proprionate; sorbates, for example potassium sorbate; antioxidant preservatives, for example retinoids (e.g. vitamin A), ascorbic acid (vitamin C), butylated hydroxytoluene (BHT) and butylated hydroxyanisole (BHA); sulphites, for example sodium sulphite, sodium bisulphite, sodium metabisulphite, potassium bisulphite, and potassium metabisulphite; and chelating agents, for example ethylenediaminetetraacetic acid (EDTA). Such compounds are suitably not employed as discrete ingredients in the present invention.

In significant embodiments of the invention no ingredient is added as a designated preservative. However preservation may be boosted by addition of an ingredient which has inherent or incidental preservative action. For example fruit or vegetables added for flavouring or soluble fibre addition may be natural sources of Vitamins A and C and of sugars, each of which has some preservative action.

Suitably a food product or food portion of the invention contains not more than 260 kcal per 100 g of the food product or food portion; suitably not more than 220 kcal per 100 g. In embodiments a food product or food portion of the invention may contain not more than 200 kcal per 100 g of the food product, for example not more than 160 kcal per 100 g.

It is important in the present invention that there are present protein and water, in defined amounts. Water assists in achieving a protein bar which does not have the detriment of being high in calories. Beyond protein and water, further, optional, ingredients are soluble fibre, monosaccharide and/or disaccharide, and sugar alcohol. These cannot all be present at high amounts but the invention allows them to be selected as wished. Thus, there may be high soluble fibre embodiments; high monosaccharide and/or disaccharide embodiments; and high sugar alcohol embodiments. Further, there may be embodiments which contain moderate amounts of two or three of these ingredients. Generally, it is contemplated that the summated amount of soluble fibre, monosaccharide and/or disaccharide and sugar alcohol will be in the range 10 to 40 wt%, for example from 14 to 30 wt%.

In accordance with a further aspect of the present invention there is provided a method of making a food product of the first aspect of the invention, the method comprising the steps of mixing together the ingredients to form a mass and cooking the mass until set. Suitably the mass is cooked until its core temperature is at least 76 °C. In embodiments of the invention the mass may be cooked until its core temperature is at least 80 °C and in some embodiments at least 84 °C.

Suitably cooking is carried out in such as a way as to prevent or inhibit moisture loss, during cooking.

Suitably cooking is carried out in such as a way as to minimise variation in temperature from outside to inside of the mass, during cooking.

Suitably the mixture is cooked in an impermeable casing or cover, as it is found that this is advantageous in preventing moisture loss. In addition it serves to reduce variation in temperature from outside to inside, during cooking.

Cooking may be by any available method, including baking and steaming.

Cooking modifies the proteins so that they change their structure and set the mass into a shape-stable solid form, as happens in many traditional cooking processes, for example when baking cakes or puddings. Further, cooking has a sterilising effect.

The cooked mass, which could now be called a slab or block (or which may be shaped into a slab or block) may be allowed to cool in ambient air, or may be force-cooled, for example by placement in a refrigerated space and/or by use of an air flow.

Before or after cooling, the cooked mass may be divided into food portions, as described and defined above, prior to packing. However as noted above the cooked mass or slab could be sold as is, and the end-user could cut it into food portions as required.

The cooked mass could be enrobed with an edible coating, before being divided into food portions. However when the cooked mass is divided into food portions in the factory it is preferred that those individual food portions are enrobed there. Enrobing is considered attractive to most consumers and helps to maintain the freshness of the food portions. Full enrobing covering the entire surface of the food portions is favoured.

Enrobing may be carried out using, for example, a chocolate-based, yoghourt-based, nut butter-based or fruit-based coating or glaze. The enrobing coating or glaze is a solid at ambient temperature and liquefies under moderate heating, to permit enrobing.

The food product or food portion of the invention is suitably refrigerated until it is eaten, to maintain freshness and maximise shelf-life.

In this specification definitions of calorific value are given. These are based on the Atwater indirect system. This method uses previously-determined values of calories present in the energy-containing components of a food product. For example proteins and carbohydrates have been determined each to have 4 kcal/g, and fats, 9 kcal/g. These values are widely used and may be found in official sources, for example in the Food and Nutrition Information Center (FNIC) of the U.S. Department of Agriculture.

Tables of calories values for mixed foods are widely available. One example of many publications is Easy Calorie Counter Book: Pocket-Sized Guide with Food Calorie Lists, by 'Nutri Core' (author), ISBN 9798375419473.

Furthermore ingredient suppliers are required to provide detailed information about their products, and this may include calorific content or at the least the products' breakdown in terms of protein, fat and different carbohydrates. The calories provided by all of the energy-containing components of the food product can be summated to determine the calorie content of a food product or food portion of the invention,

Calorie values were originally determined by burning substances in a calorimeter. A sample of a component was placed in an insulated, oxygen-filled chamber - a bomb calorimeter - surrounded by water. The sample was burned completely. The heat from the burning increased the temperature of the water, which was measured and which indicated the number of calories in the component. It is not necessary to go to such lengths now, that values have been widely determined, and are tabulated for use in calculations.

The invention will now be further described, by way of example, with reference to the following examples of food products and food portions of the present invention.

### Example 1

The following ingredients were employed in this example to make individual food portions in the form of bars which were high in protein and high in soluble fibre.
▪ milk protein concentrate - 13 wt%. This had a protein content of 85 wt%. Milk protein concentrate contains substantially the entire protein content of milk (casein and whey)
▪ soy protein isolate - 12 wt%. This had a protein content of 90 wt%
▪ oligofructose syrup derived from chicory roots - 25 wt%. This provides soluble fibre
▪ cocoa - 3 wt%
▪ water - balance

In the process, the liquid components were added to the solid components in a mixer and blended well. The mass was filled into a plastic casing or mould which was placed in a steam oven and heated to achieve a setting and thermal pasteurisation core temperature of at least 76 °C.

Next, the cooked mass was cooled to room temperature using chilled air. It was then removed from the casing or mould, formed into a flat slab shape, and cut into individual food bars each 45 g in weight, which were wrapped individually in wrapping film having low air-permeability. To extend the shelf-life the food bars are intended to be kept refrigerated during transportation and in shops, and by customers.

Nutritional information for the food bars of Example 1 was as follows:

| Uncoated food bar | Protein | Soluble fibre | Fat | Mono/disaccharide | Additional carbohydrates | Water | Calories (kcal) |
|---|---|---|---|---|---|---|---|
| per 100g: | 21.8 g | 16.6 g | 0.8 g | 3.9 g | 1.0 g | balance | 147 |

"Additional carbohydrates" (in this and further examples) refers to carbohydrates which are not soluble fibre, monosaccharides, disaccharides or polyols (sugar alcohols).

It can be seen that the resulting food bars were high in protein and soluble fibre and low in mono/disaccharides, fat and calories. It can be calculated that each 45 g food bar contained 66 kcals.

### Example 2

The food bars of Example 1 were enrobed with a settable dark cocoa-containing compound coating high in soluble fibre, prior to setting and wrapping. The weight of the coating was 20 wt% on weight of an unenrobed food bar; thus, about 9 g in this example, in which an unenrobed food bar weighs 45 g. Such a coating is regarded by most consumers as improving the eating quality. Further, it serves as a barrier to moisture and prolongs the shelf-life of the food bars, albeit at the expense of adding some fat and calories.

Nutritional information for the food bars of Example 2 is as follows:

| Uncoated food bar | Protein | Soluble fibre | Fat | Mono/disaccharide | Additional carbohydrates | Water | Calories (kcal) |
|---|---|---|---|---|---|---|---|
| per 100g: | 19.3 g | 20.3 g | 8.3 g | 4.1 g | 1.6 g | balance | 215 |

It will be seen that despite the addition of the coating, the calorie count of the coated food bars of Example 2 was still very low. In contrast typical protein bars available on the market have calorie values in the range from 340 to 520 kcal, per 100 g.

### Example 3

The following ingredients were employed in this example to make uncoated and coated individual food bars which are higher in protein than those of Example 1, and still high in soluble fibre, in the manner described in Examples 1 and 2:
▪ milk protein concentrate - 12 wt%. This had a protein content of 90 wt%
▪ soy protein isolate - 12 wt%. This had a protein content of 90 wt%
▪ pea protein isolate - 10 wt%. This had a protein content of 80 wt%
▪ oligofructose syrup derived from chicory roots - 20 wt%. This provides soluble fibre
▪ cocoa - 2 wt%
▪ water - balance

Some bars were left uncoated and wrapped. The remainder were enrobed with a yoghurt and white chocolate coating.

Results given below are for the uncoated bars. These were high in protein, high in soluble fibre and low in mono/disaccharides, fat and calories.

| Uncoated food bar | Protein | Soluble fibre | Fat | Mono/disaccharide | Additional carbohydrates | Water | Calories (kcal) |
|---|---|---|---|---|---|---|---|
| per 100g: | 29 g | 13.2 g | 0.7 g | 3.2 g | 1.4 g | balance | 167 |

### Example 4

The following ingredients were employed in this example to make individual food portions in the form of bars which were high in protein, but they differed from those of Examples 1 to 3 in that they were higher in mono/disaccharides and lower in soluble fibre. The bars were made in the manner described in Examples 1 and 2 except that they were cooked to achieve an internal temperature of 86 °C.
▪ milk protein concentrate - 15 wt%. This had a protein content of 85 wt% protein
▪ soy protein isolate - 12 wt%. This had a protein content of 90 wt%
▪ glucose syrup - 14 wt%
▪ oligofructose syrup derived from chicory roots - 5 wt%. This provides soluble fibre
▪ cocoa - 3 wt%
• water - balance

Some bars were left uncoated and wrapped. The remainder were enrobed with a yoghurt and white chocolate coating.

Nutritional information for the food bars of Example 4 (uncoated) is as follows:

| Uncoated food bar | Protein | Soluble Fibre | Fat | Mono/disaccharide | Additional carbohydrates | Water | Calories (kcal) |
|---|---|---|---|---|---|---|---|
| per 100g: | 23.5 g | 4.2 g | 0.8 g | 9.2 g | 4.9 g | balance | 167 |

### Example 5

The following ingredients were employed in this example to make individual, uncoated food portions in the form of bars which were high in protein, but they differed from those of Examples 1 to 4 in that they were moderately high both in soluble fibre and in mono/disaccharides. The bars were made in the manner described in Example 1, except that they were cooked to achieve an internal temperature of 82 °C.
▪ milk protein concentrate - 18 wt%. This contained 85 wt% protein
▪ soy protein isolate - 15 wt%. This had a protein content of 90 wt%
▪ glucose syrup - 8 wt%
▪ oligofructose syrup derived from chicory roots - 8 wt%. This provides soluble fibre
▪ cocoa - 3 wt%
▪ water - balance

Some bars were left uncoated and wrapped. The remainder were enrobed with a yoghurt and white chocolate coating.

Nutritional information for the food bars of Example 5 (uncoated) is as follows:

| Uncoated food bar | Protein | Soluble Fibre | Fat | Mono/disaccharide | Additional carbohydrates | Water | Calories (kcal) |
|---|---|---|---|---|---|---|---|
| per 100g: | 28.6 g | 6.1 g | 0.9 g | 6.2 g | 3.4 g | balance | 173 |

### Example 6

The following ingredients were employed in this example to make individual, uncoated food portions in the form of bars which were high in protein, but they differed from those of Examples 4 and 5 in that they did not contain added mono/disaccharides or soluble fibre but did contain maltitol, as sweetening agent. The bars were made in the manner described in Example 1, except that they were cooked to achieve an internal temperature of 80 °C.
▪ milk protein concentrate - 12 wt%. This contained 85 wt% protein
▪ soy protein isolate - 13 wt%. This had a protein content of 90 wt%
▪ maltitol - 25 wt%
▪ Cocoa - 3 wt%
▪ water - balance

Some bars were left uncoated and wrapped. The remainder were enrobed with a yoghurt and white chocolate coating.

Nutritional information for the food bars of Example 6 (uncoated) is as follows:

| Uncoated food bar | Protein | Soluble Fibre | Fat | Mono/disaccharide | Sugar alcohol (maltitol) | Additional carbohydrates | Water | Calories (kcal) |
|---|---|---|---|---|---|---|---|---|
| per 100g: | 22g | 1g | 1g | 1g | 19g | 0g | balance | 149 |

The water content of the food bars in these examples may be slightly higher than the amount of actual water added, because of moisture present in the other ingredients.

## Claims

1. A cooked, solid, food product which contains:
a) at least 10 wt% of protein and
b) at least 20 wt% of water,
and
c) which has an energy content of not more than 300 kcal per 100 g of the cooked, solid, food product.

2. A food product as claimed in claim 1, being a food portion whose weight is not more than 100 g, for example not more than 80 g, and suitably not more than 60 g.

3. A food product as claimed in claim 1 or 2, which contains at least 14 wt% of protein, for example at least 18 wt%; or at least 20 wt%, for example at least 24 wt%.

4. A food product as claimed in any preceding claim, wherein the protein comprises a natural protein and/or a derived protein, for example a fully or partially hydrolysed protein, or a fermented protein; wherein the protein is selected from one of more of a dairy protein, a vegetal protein and an animal protein.

5. A food product as claimed in any preceding claim, which contains soluble fibre.

6. A food product as claimed in claim 5, which contains at least 4 wt% of soluble fibre, for example at least 6 wt%, and suitably at least 10 wt%.

7. A food product as claimed in claim 5 or 6, in which the soluble fibre comprises oligofructose syrup (FOS) and/or galactooligosaccharide (GOS) and/or polydextrose and/or a dextrin, for example wheat dextrin and/or maltodextrin.

8. A food product as claimed in any preceding claim, which contains a monosaccharide, for example selected from glucose, fructose, ribose and galactose; and/or a disaccharide, for example selected from sucrose, lactose and maltose.

9. A food product as claimed in claim 8, which contains up to 30 wt% of monosaccharide and/or disaccharide (total); suitably up to 24wt%; or up to 20 wt%; or up to 16 wt%.

10. A food product as claimed in any preceding claim, which contains sugar alcohol, for example selected from xylitol, erythritol, sorbitol, mannitol, isomalt, and maltitol.

11. A food product as claimed in claim 10, which contains up to 30 wt% of sugar alcohol; suitably up to 24 wt%; or up to 20 wt%; or up to 16 wt%.

12. A food product as claimed in any preceding claim, which contains at least 25 wt% of water, for example at least 30 wt%; or at least 40 wt%, for example at least 45 wt%.

13. A food product as claimed in any preceding claim, which contains not more than 260 kcal per 100 g of the food product; suitably not more than 220 kcal per 100 g, for example not more than 200 kcal per 100 g, for example not more than 160 kcal per 100 g.

14. A food product as claimed in any preceding claim, which is enrobed by an edible coating; in such a case the numerical definitions given in the claims above refer to the unenrobed food product.

15. A method of making a food product as claimed in any preceding claim, comprising the steps of mixing together the ingredients to form a mass and cooking the mass until set; suitably by cooking the mass until its core temperature is at least 76 °C,
wherein the cooked mass is preferably divided into food portions whose weight is not more than 100 g, for example not more than 80 g, and suitably not more than 60 g; which food portions are optionally enrobed.
